# EUROPEAN PATENT SPECIFICATION

(11) **EP 2 338 855 B1**
(45) Date of publication and mention of the grant of the patent: **18.02.2015**
(21) Application number: 10196528.3
(22) Date of filing: 22.12.2010
(51) Int. Cl.: C04B 40/00, C04B 111/10, F04B 51/00, C04B 30/00

(54) **Composition of a fluid mix applicable as dummy fluid in wear testing of pumps**
Fliessfähige Zusammensetzung anwendbar als Experimentierflüssigkeit in Abnutzungstests von Pumpen
Composition d'un mélange fluidique utilisable comme un fluide factice pour un test de vieillissement de pompes

(30) Priority: 23.12.2009 IT UD20090235
(43) Date of publication of application: 29.06.2011
(73) Proprietor: Cifa S.P.A., 20030 Senago, Milano (IT)
(72) Inventor: Cortellini, Mauro Marco, 20089 Rozzano (MI) (IT); Maini, Paolo Dario, 20052 Monza (IT); Lorenzi, Sergio, 24060 Costa di Mezzate (BG) (IT); Coppola, Luigi, 20151 Milano (IT)
(74) Representative: Petraz, Gilberto Luigi

(56) References cited:
- EP-A2- 2 085 366
- WO-A1-94/10099
- WO-A1-2005/087687
- WO-A1-2007/096686
- DE-A1- 19 531 942
- US-A- 5 951 751
- US-B1- 6 402 833

## Description

### FIELD OF THE INVENTION

The present invention concerns a composition of a fluid mix for the building trade, in particular an optimized composition for use in assessing the degree of wear in pump units.

### BACKGROUND OF THE INVENTION

In the building trade it is known to use concrete made with cements according to the norm UNI EN 197-1. It is also known that fresh concrete has rheological properties such as to render it pumpable so as to be laid using suitable pumping units. Concrete is normally a mixture, or mix, based on water, stone or inert aggregates, sand and other additives, with a binder. If the hydraulic binder is a cement it is called concrete or cement mix.

Portland cement is the binder most commonly used to make cement mixes, and is obtained by pulverizing clinker. Clinker is a material obtained by baking a mixture of limestone and clay; from this, through pulverizing, with the presence of small percentages of gypsum, cement is obtained.

The workability or consistency of fresh concrete is usually determined by measuring the slump, that is, the lowering of the Abrams cone (UNI-EN 12350-2). The greater the slump, the more workable the concrete will be and the easier it will be to lay (Table 1).

**Table 1: Consistency classes**

| Consistency class | Slump in mm | Current denomination | Recommended field of application |
|---|---|---|---|
| S1 | from 10 to 40 | Damp | - |
| S2 | from 50 to 90 | Plastic | Stringcourses, sewers |
| S3 | from 100 to 150 | Semi-fluid | Stairs, ramps, inclined roofs |
| S4 | from 160 to 210 | Fluid | Foundations, walls, pillars, girders, floors |
| S5 | more than 220 | Super-fluid | Thin structures, highly reinforced slabs, floorings |

In particular, the fresh concrete normally used has an initial fluidity corresponding to a consistency class S4 or S5, corresponding to slump values respectively of 160-210 mm and more than 210 mm.

Among producers of pumping units for concrete as above, it is known that the pumping units have to be subjected to wear tests which continue over time, for example using a test bench for pumping units as described in the European Patent application EP-A-2.136.078, in the name of the present Applicant.

In order to give a reliable result, such wear tests have to be carried out using a pumpable material with rheological characteristics similar to fluid concrete and usually it is actually cement mix that is used. However, concrete has relatively rapid setting times, especially if compared with the desired duration of the wear tests as above, which is more than one thousand hours of functioning of the pumping unit. Consequently, the fact that the cement concrete sets in practice limits the duration of the wear tests to periods of time less than desired.

From the documents WO-A-2005/087687, WO-A-2007/096686, WO-A-94/10099, EP-A-2.085.366, US-A-5,951,751, DE-A-19531942 and US-B-6,402,833 compositions of mixes for the building trade are known which set rapidly and therefore are not suitable for carrying out the wear tests described above.

In particular, WO-A-2005/087687 discloses a construction composition comprising: an ash in an amount of 90.0-99.9 wt. %, based on the total weight of the construction composition, wherein the ash is fly ash or bottom ash; an additive composition in an amount of 0.1-10.0 wt. %, based on the total weight of the construction composition, wherein the additive composition comprises a component from a first group consisting of metal chlorides and a component from a second group consisting of silica, zeolite and apatite, and wherein the first group comprises 70.0-99.0 wt. % of the total additive composition and the second group comprises 1.0-30.0 wt. % of the total additive composition; and cement, in an amount of 0.0-5.0 wt. %, based on the total weight of the construction composition.

Purpose of the present invention is to achieve a composition of a fluid mix for the building trade which has rheological properties similar to those of fluid cement concrete. In particular, the composition according to the present invention must possess rheological parameters in terms of cohesion and viscosity very similar to those of concretes made with cements in conformity with the norm UNI EN 197-1 laid using pumping units.

Another purpose is that the composition according to the present invention has at the same time a prolonged workability with respect to the cement concrete itself, so that it can conveniently be used in wear tests for pumping units also for long periods of time.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purpose, a composition of a fluid mix for the building trade according to the present invention, advantageously to carry out wear tests on pumping units, comprises water, stone aggregates and one or more binders in the form of pozzolanic additives comprising silicic fly ash, with the provision that it substantially does not contain any other binding materials or substances that produce calcium hydroxide, in particular in the absence of Portland cement or lime, both in oxide form and also as air-hardening lime or hydrated lime.

According to another form of embodiment, the pozzolanic additives also comprise silica fume.

Another form of embodiment provides that the composition also comprises one or more high-efficiency retardant additives, or super-retardants, to delay the setting or hardening reaction of the concrete.

Furthermore, another form of embodiment provides that the composition comprises one or more high-efficiency water reducing additives.

In one form of embodiment of the present invention, the composition of fluid mix for the building trade does not substantially contain binding materials or substances that produce calcium hydroxide, in particular in the absence of cement or lime, both in oxide form and also as air-hardening lime or hydrated lime, comprises:
- water between 7% and 8%, preferably between 7.4% and 7.6% in weight (Kg/m³),
- stone aggregates between 75% and 83%, preferably between 77% and 80% in weight (Kg/m³),
- one or more components in the form of pozzolanic additives comprising silicic fly ash between 8% and 16% in weight (Kg/m³) and silica fume between 0.9% and 1.7% in weight (Kg/m³),
- one or more high-efficiency retardant additives to delay the setting reaction, between 0.02% and 0.03% in weight (Kg/m³), preferably between 0.023% and 0.027% in weight (Kg/m³),
- one or more high-efficiency water reducing additives between 0.05% and 0.06% in weight (Kg/m³), preferably between 0.052% and 0.055% in weight (Kg/m³).

Another feature of the present invention concerns the use of a composition as described above, to carry out wear tests on pumping units, or a method to carry out wear tests on pumping units that provides to use said composition according to the present invention. For example, the present invention can be used in the field of a test bench for pumping units as described in the European Patent application EP-A-2.136.078, in the name of the present Applicant, incorporated completely herewith as a reference.

Another feature of the present invention concerns an intermediate composition to make a fluid mix for the building trade, advantageously to carry out wear tests on pumping units, comprising stone aggregates and one or more binders in the form of pozzolanic additives comprising silicic fly ash, with the provision that it substantially does not contain any other binding materials or substances that produce calcium hydroxide, in particular in the absence of cement or lime, both in oxide form and also as air-hardening lime or hydrated lime.

Another feature of the present invention concerns a method to prepare a composition of a fluid mix for the building trade, advantageously to carry out wear tests on pumping units, which provides to mix water, stone aggregates and one or more binders in the form of pozzolanic additives comprising silicic fly ash, with the provision that it substantially does not contain any other binding materials or substances that produce calcium hydroxide, in particular in the absence of cement or lime, both in oxide form and also as air-hardening lime or hydrated lime.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a diagram of the granulometric analysis of stone aggregates used in the composition according to the present invention;
- fig. 2 is a diagram of the granulometric distribution of fly ash with respect to silica fume and ordinary Portland cement.

### DETAILED DESCRIPTION OF A PREFERENTIAL FORM OF EMBODIMENT

Some forms of embodiment of the present invention provide a composition of a fluid mix for the building trade comprising water, stone aggregates or inerts and pozzolanic additives comprising silicic fly ash and silica fume, with the provision that it substantially does not contain any other binding materials based on lime, in particular binding materials comprising calcium (air-hardening lime or hydrated lime, ordinary Portland cement).

According to the present invention, recourse is made to the use of fly ash as a pozzolanic additive, in order to be able to make a composition of mix able to not set for the period of 30 days required for the wear tests on pumping units.

Another form of embodiment also provides silica fume as another pozzolanic additive.

Fly ash and silica fume are ingredients used for the routine production of concrete (as in the case of ash) or for making special concretes (as happens for silica fume).

These pozzolanic materials, however, in the production of ordinary concretes are used together with cement since they contribute to hardening and the development of mechanical resistances to compression of the mix thanks to their combination with calcium hydroxide made available by the hydration of the bicalcic and tri-calcic silicate contained in clinker. In the absence of calcium hydroxide, pozzolanic materials do not in themselves have binding characteristics. Therefore, in making the composition of the mix according to the invention, only pozzolanic additives (in the absence of cement) were used, so that, although they confer rheological properties on the mix (cohesion and viscosity) similar to those of a traditional concrete, they do not cause the mix to set, thanks to the absence of the calcium hydroxide caused by the hydration of the clinker of Portland cement.

In particular, fly ash possesses a granulometry that practically coincides with that of Portland cement and a comparable chemical-mineralogical composition, although it does not have the binding characteristics proper of cement.

All these peculiarities have directed our choice to silicic fly ash, to replace Portland cement for making a mix that does not set for a long period.

On the contrary, silica fume, which is granulometrically finer than fly ash and cement, was introduced in order to increase the cohesion and viscosity of the mix according to the invention.

Another form of embodiment provides that the composition also comprises one or more high-efficiency retardant additives, or super-retardants, to delay the setting reaction of the concrete. The introduction of the high-efficiency retardant additive prevents the presence of possible traces of calcium hydroxide in the cement mixer from allowing the activation of pozzolanic reactions which would cause the mix to set and consequently to lose plasticity.

Furthermore, other forms of embodiment provide that the composition comprises one or more high-efficiency water reducing additives. This has the advantage of producing a concrete with a dose of binder of 300-310 Kg/m³ (this is the typical dosage of cement in the most commonly used concretes laid using pumps) which at the same time has a consistency class S5. The high-efficiency water reducing additive allows to reduce the water in the mix so that the ratio of water to (ash + silica fume) is comprised between 0.4 and 0.6, advantageously between 0.55 and 0.60. The water cement (w/c) ratio of most commonly pumped concretes is around this range of values.

There now follows a more detailed discussion of the composition of the fluid mix according to the present invention.

### Stone aggregates

The aggregate or inert is defined by a description of the granulometry of the solids that make up each size used.

In general, all types of aggregate can be used, irrespective of their granulometry, irrespective of shape, rounded or derived from crushing, and irrespective of texture, smooth or rough.

Using granulometric combination methods, the different sizes of aggregate are proportioned, whether they have a smooth or rough surface texture, whether they are rounded or derived from crushing, in order to make the distribution of the granulometric curve uniform with the optimum reference curve, that is, the Bolomey curve (normally, the "ideal" granulometric distribution of all the solids inside a concrete - cement, sand, coarse inert - can be calculated using the so-called Bolomey equation).

Any aggregate can be used with the present invention, the important thing is the proportioning of the different fractions.

For example it is possible to use gravel, fine gravel, mixed 0/6, sand 0/2 or other.

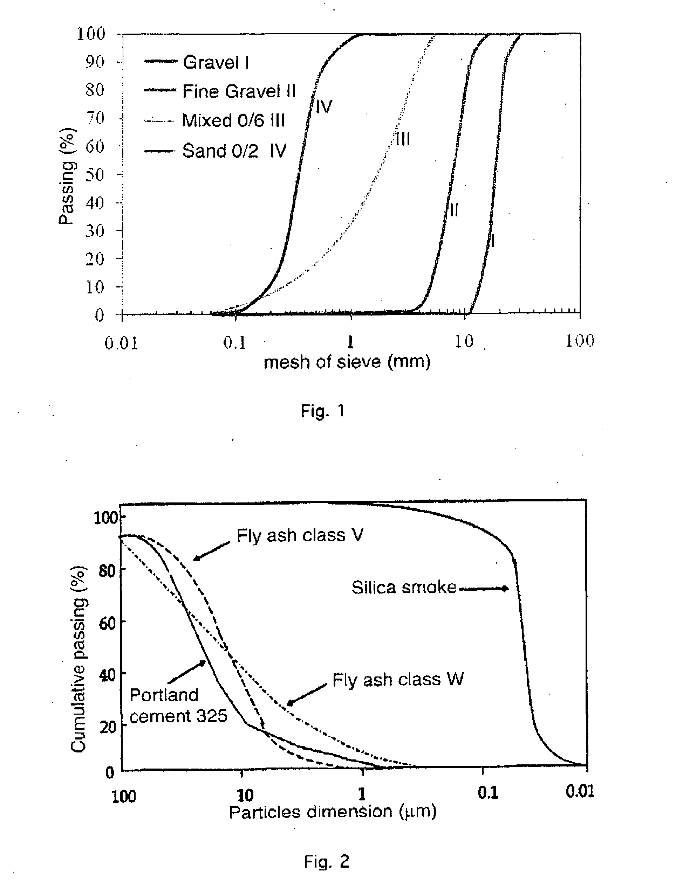

In some forms of embodiment of the present invention stone aggregates derived from crushing were used, available from the concrete mixing plant in Arcugnano (Vicenza), property of Calcestruzzi S.p.A., in four different sizes that were characterized through granulometric analysis (fig. 1), measurements of volumic mass in SSD (saturated surface dry) conditions (Table 2) and water absorption in SSD conditions (Table 3).

The inert materials, round or crushed, must be in a condition of surface dry saturates, which occurs when the open pores of the aggregates are completed saturated with water, while the surface is dry. In these conditions, the aggregate in the concrete neither absorbs nor gives up water to the mix.

Advantageously, the choice of using crushed aggregates instead of round ones was dictated by the need to maximize the abrasive effect of the concrete on the elements that make up the pumping unit.

**Table 2: Volumic mass of the granule in SSD conditions**

| Denomination | Volumic mass SSD (Kg/l) |
|---|---|
| Gravel | 2.72 |
| Fine gravel | 2.75 |
| Mixed 0/6 | 2.64 |
| Sand 0/2 | 2.57 |
| | |

| Table 3: Results of the water absorption measurements | |
|---|---|
| Denomination | Absorption SSD (%) |
| Gravel | 1.49 |
| Fine gravel | 1.21 |
| Mixed 0/6 | 1.51 |
| Sand 0/2 | 0.58 |

Normally, the granulometry of the aggregates, according to literature, is as follows:
- sand with sizes comprised between 0.063 mm and 4 mm;
- fine gravel with sizes comprised between 4 mm and 15 mm;
- gravel with sizes comprised between 15 mm and 40 mm.

As can be seen from the granulometric analysis in fig. 1 (granulometric distribution of the aggregates used to make the mix) the maximum size (Dₘₐₓ) of the aggregate used preferentially in the present invention, is 32 mm, which corresponds to the gravel in fig. 1: this maximum size is by far the most commonly used in making concrete. Therefore, it reproduces not only the most common situation on site, but also has the advantage that it increases the abrasive effect with respect to a mix made with smaller maximum size aggregates.

### Binders

### 1) Fly ash

Fly ash is a pozzolanic material used, increasingly commonly, in making concretes (UNI-EN450). It is a mineral additive able to improve some performances of the mix compared to those of mixes made only with cement. Fly ash provokes a reaction of a pozzolanic type with the calcium hydroxide deriving from the hydration process in the Portland cement to produce secondary hydrated silicates which give benefits both in terms of performance and also in terms of durability. Fly ash also considerably improves the pumpability of mixes with a low dosage of cement.

Fly ash is a fine powder that is obtained as a sub-product of burning coal produced inside thermoelectric power plants. The term fly ash derives from the characteristic of the product of combustion which generates two types of ash: ash collected on the bottom, generally heavier and coarser (bottom ash), and the lighter, extremely volatile ash (fly ash).

The typical composition of fly ash depends on the type of fuel considered: anthracite or bituminous coal, rather than lignite or sub-bituminous coal.

It is composed mainly by a high content of not completely crystallized glass material (amorphous and crystalline SiO₂) oxides of calcium and magnesium (CaO, MgO), sodium and potassium (Na₂O, K₂O) aluminum (Al₂O₃) and iron (Fe₂O₃).

The percentage of amorphous material contained confers the pozzolanic characteristic on the material.

In some forms of embodiment, silicic fly ash has a minimum content of SiO₂ from 40% to 50%, preferably from 43% to 46% in weight and a maximum content of CaO from 2% to 10, preferably from 2.5% to 7% in weight.

The chemical composition of fly ash produced by thermoelectric power stations in Italy is shown in fig. 4:

**Table 4: chemical composition of fly ash produced by thermoelectric**

| power stations in Italy (expressed as percentages) | | | | | | | | |
|---|---|---|---|---|---|---|---|---|
| Power station | SiO₂ | Al₂O₃ | Fe₂O₃ | CaO | MgO | F₂O | Na₂O | SO₃ |
| Vado Ligure | 43.4 | 24.7 | 8.7 | 3 | 1.6 | 2.2 | 0.4 | 1.3 |
| Genoa | 44.4 | 28.3 | 6.3 | 2.7 | 1.1 | 1.7 | 0.4 | 1.3 |
| Brindisi | 44.9 | 29.2 | 5.1 | 3.7 | 0.9 | 1.2 | 0.3 | 0.6 |
| La Spezia | 43.1 | 28.2 | 5.4 | 4.5 | 1.6 | 1.5 | 0.3 | 1.4 |
| Monfalcone | 44.5 | 30.8 | 4.1 | 5 | 1.1 | 1.1 | 0.3 | 0.7 |
| Marghera | 44.4 | 28.8 | 3.9 | 5.6 | 1.2 | 0.9 | 0.4 | 0.6 |
| Fusina | 45.7 | 29.7 | 4.2 | 4.8 | 1.1 | 1.1 | 0.3 | 0.5 |
| Sulcis | 42.6 | 30.1 | 6.5 | 6.6 | 1.4 | 0.9 | 0.4 | 0.8 |
| Vado Ligure | 43.4 | 24.7 | 8.7 | 3 | 1.6 | 2.2 | 0.4 | 1.3 |

Fly ash essentially consists of generally spherical particles with sizes varying between 1 and 100 micrometers. The granulometric distribution of the particles that make up fly ash is very similar to that of an ordinary Portland cement (fig. 2, comparison between the granulometric distribution of fly ash, silica fume and ordinary Portland cement). The specific surface of fly ash is comprised between 0.3 and 0.6 m²/g, while the absolute volumic mass is 2.2 Kg/liter.

Depending on the chemical composition, the ash is classified into fly ash classes V and W (EN197-1).

Fly ash with a low calcium content (1%-2.5%), or class V, are the most used and are practically produced by the rapid cooling from the molten state of the impurities present during the combustion of coal. This ash is called silicic flying ash, and needs calcium hydroxide deriving for example from the hydration process of Portland cement, from quicklime or hydrated lime, in order to carry out the pozzolanic action and thus assume binding characteristics.

Ash produced by the combustion of lignitic or sub-bituminous carbons belongs to class W. This ash is characterized by a high content of calcium oxide (CaO), generally more than 20%, and is called calcic fly ash. This type of ash has binding properties irrespective of the addition of calcium hydroxide. For this reason, it can be defined a hydraulic binder to all effects, since the hydration process of the pozzolana can take place spontaneously.

### 2) Silica fume

Silica fume is essentially the sub-product of the reduction of very pure quartz with carbon coke, made in arc furnaces for the production of silicon and silicon-based metal alloys.

The chemical reactions involved in the production of silicon are complex, however they can be simplified as follows:

SiO₂ + C + Heat (electric arc T = 2000°C) → SiO + CO

SiO + CO → Si (metal) + CO2

SiO + O2 (air) → SiO₂ (silica fume)

Practically, to produce metal silicon, 30% of silica fume is produced.

The chemical composition of silica fume is mainly represented by silica (SiO₂) present to a degree varying between 85% and 98%. Oxides of aluminum, iron, calcium and magnesium are contained to a negligible degree.

Compared with flying ash, silica fume contains double the amount of completely amorphous silica.

In some forms of embodiment, silica fume has a minimum content of SiO₂ from 80% to 98% in weight and a maximum content of CaO from 0.1% to 1% in weight.

The chemical compositions of silica fume are shown in Table 5:

**Table 5: chemical composition of silica fume depending on the product**

| Composition (%) | Provenance of the silica fume (production of alloys) | | | | |
|---|---|---|---|---|---|
| | Si | Fe-Si | Fe-Si | Fe-Si | Fe-Cr-Si |
| | | 90% | 75% | 50% | |
| SiO₂ | 94-98 | 90-96 | 86-90 | 89-85 | 82-84 |
| Fe₂O₃ | 0.02-0.15 | 0.2-0.8 | 0.3-5 | 7-8 | 0.5-1.5 |
| Al₂O₃ | 0.1-0.4 | 0.5-3 | 0.2-1.7 | 0.5-1 | 2-3 |
| CaO | 0.1-0.3 | 0.1-0.5 | 0.2-0.5 | 0.5-1 | 0.5-1 |
| MgO | 0.2-0.9 | 0.5-1.5 | 1-3.5 | 0.5-1 | 6-8 |
| Na₂O | 0.1-0.4 | 0.2-0.7 | 0.3-1.8 | - | - |
| K₂O | 0.2-0.7 | 0.4-1 | 0.5-3.5 | - | 1-2 |
| C | 0.2-1.3 | 0.5-1.4 | 0.8-2.3 | 1-2 | 1-2 |
| S | 0.1-0.3 | 0.1-0.4 | 0.2-0.4 | - | - |

The granulometric distribution is shown in fig. 2. Silica fume is a material characterized by an average particle diameter within a range of size lower than cement and fly ash; moreover, the specific surface of this material is decidedly higher than that of fly ash: 15-20 m²/g against 0.3-0.6 m²/g.

Silica fume is a material almost completely based on completely amorphous silica, and therefore it has excellent pozzolanic characteristics, much better than those of fly ash due to the total absence of low-reactivity crystalline compounds.

The pozzolanic reaction, as in the case of fly ash, can occur only and exclusively if there are sufficient quantities of calcium hydroxide: in the absence of this, silica fume behaves essentially as an inert filler.

### Additives

### 1) High-efficiency water reducing additive

The family of high-efficiency water reducing additives comprises an extremely wide variety of natural organic or synthetic polymers, soluble in water, but all referable to four main families:
i) derivatives of lignin sulphonate (mainly used for the production of fluidifiers/water reducers);
ii) derivatives of condensed naphthalene sulphonate with formaldehyde;
iii) derivatives of condensed melamine sulphonate with formaldehyde;
iv) carboxylate polymers (polyacrylates or polycarboxilates) often identified with the term "acrylics".

Added to the mix, in the state of the art in measurements varying between 0.2-0.5% (fluidifiers) and 0.6-2.0% (high-efficiency water reducers), the additives:
- are able to reduce the water in the mix with respect to a mix of the same consistency without additives (water reducers/super-reducers);
- given the same initial consistency, reduce the water/cement ratio leaving unchanged the dosage of original cement;
- allow to reduce the dosage of original cement leaving the water/cement ratio unchanged;
- allow to increase the workability of the concrete (fluidifiers/high-efficiency water reducers), leaving unchanged both the water in the mix and the dosage of cement in a mix without additives.

Super-fluidifiers/high-efficiency water reducers (SF) are those able to reduce the water in the mix to the same consistency as the reference mix by at least 12%, also ensuring that the resistance at 1 and 28 days is greater than that of concrete without additives respectively by at least 40% and 15% (UNI-EN 934/2). These additives must also guarantee an increase in workability of at least 120 mm in terms of slump (or 160 mm spread diameter) with respect to the mix with the same water/cement ratio without prejudicing the mechanical resistance to compression at 28 days that must be at least equal to 90% that of the reference mix.

A high-efficiency water reducing additive usable in some forms of embodiment of the present invention is Axim Creative LX, an acrylic-based high-efficiency water reducer.

### 2) High-efficiency retardant additive

Additives to delay setting are chemical products able to slow down the hydration of the cement and therefore to extend the time the concrete remains in a plastic state. This need arises when it is necessary to transport the concrete for long distances, with long traveling times, especially in hot periods when the hydration kinetics of the cement is particularly fast. Retardant additives are used in this context to reduce the loss of workability so as to guarantee, when the concrete is unloaded on site, the workability pre-determined by the design engineer. It must also be pointed out that setting retardant additives also have the ability - although modest - to reduce the water in the mix, given the same consistency, by 2-5%, with the same consistency, depending on the dosage of the product (generally 0.2-0.5% with respect to the mass of the cement). The retardant additive acts mainly on inhibiting the hydration reaction of the cement, and therefore delays the production of calcium hydroxide. In the experimental mixture it is used to prevent the possible contamination of fly ash with cement residues from triggering pozzolanic reactions, with the mechanism described above.

In some forms of embodiment of the invention, the high-efficiency retardant additive used is based on phosphonates.

A high-efficiency retardant additive usable in some forms of embodiment of the present invention is Giovanni Bozzetto VEBE DP 889 S, a high-efficiency retardant additive for cement mixes.

### Preparation of the composition

Some forms of embodiment of the present invention provide to define the composition of the mix using the mix-design method.

In particular, with regard to stone aggregates, the combination, that is, the choice of the percentages of aggregates to be used for the individual granulometric fractions, was made with the aim of reproducing the optimum Bolomey curve (usually used for the production of pumpable concretes).

Table 6 shows the nominal composition of some forms of embodiment of the present invention

**Table 6: Composition of the mix**

| Composition of the mix | Requirement |
|---|---|
| Aggregates | Combined according to any optimum distribution curve of the aggregate(preferably the modified Bolomey curve) |

| Fly ash | Dosed so as to guarantee a cohesion level similar to that of concrete |
|---|---|
| Silica fume | |
| High-efficiency water reducing additive | Dosed to obtain a pre-determined degree of workability |
| High-efficiency retardant additive | Suitably dosed to inhibit possible hydration processes |
| Water/(fly ash + silica fume) | 0.4 - 0.6 |
| Initial slump (mm) | All consistency classes laid down by UNI-EN 206 - 1 |

Some forms of embodiment of the present invention provide that the composition contains, expressed as a percentage (volumic mass[Kg/m³]/volumic mass mix [Kg/m³]_{:}
- ) aggregates between 75% and 83%, preferably between 77% and 80%;
- ) fly ash between 8% and 16%, preferably between 10% and 14%;
- ) silica fume between 0.9% and 1.7%, preferably between 1.1% and 1.5%;
- ) high-efficiency retardant additive between 0.02% and 0.03%, preferably between 0.023% and 0.027%;
- ) high-efficiency water reducing additive between 0.05% and 0.06%, preferably between 0.052% and 0.055%;
- ) effective water between 7% and 8, preferably between 7.4% and 7.6%.

Some forms of embodiment of the present invention provide a ratio of water[Kg/m³]/(fly ash + silica fume) in mass comprised between 0.4 and 0.6.

### Example of the preparation of the composition according to the present invention and experimental tests

Table 7 shows the nominal composition of a form of embodiment of the mix according to the present invention, deriving from the mix-design method.

**Table 7: Composition of the mix**

| Component | Dosage (Kg/m³) |
|---|---|
| Gravel | 495 |
| Fine gravel | 390 |
| Mixed 0/6 | 795 |
| Sand 0/2 | 125 |
| Fly ash | 275 |
| Silica fume | 30 |
| High-efficiency reducing additive | 1.2 |
| High-efficiency retardant additive | 0.6 |
| Water | 170 |

The ratio of water/(ash + silica fume) was 0.56 and therefore within the range of values intended. The volume of trapped air, measured with the porosimeter, showed a value of 1%, physiological for the type of mix made.

The consistency class achieved at the end of mixing was equal in terms of slump to 230 mm, in accordance with what had been proposed. The workability was measured again during the first day after 1 and 2 hours. Subsequently, this was done on a daily basis, except at the weekends when the mix, left to rest on Friday evening, was measured for slump on the following Monday. If the slump measurement showed a loss of workability such as to determine for the mix a lower consistency class than the one pre-established (S5), then more water was added which enabled the original consistency class to be restored. It should be noted that the loss of workability recorded is to be attributed essentially to an inevitable evaporation of the water from the mix toward the external environment and obviously not to an incipient (or continuing) process of hydration of the pozzolanic materials. This statement is supported by the fact that, following the addition of water, the mix regained cohesion and viscosity identical to those obtained at the end of the first mixing of the ingredients. If the loss of workability were to be attributed to a hydration reaction (unexpected, furthermore), then the addition of water would not have made it possible to restore the initial fluidity of the mix.

Table 8 shows the data relating to the slump measurements and possible additions of water made to return workability to the initial pre-established value. The terms "initial" and "final" slump identify the value of slump respectively before and after the addition of water. Obviously, when initial and final slump coincide, this means that no additional water has been added since the slump was at least 230 mm. These measurements of workability continued for two weeks after the mix was made. As can be seen in Table 8, in the method to make the composition according to the invention and for the purposes of carrying out the desired wear tests, in order to keep the initial workability level constant, it is necessary to add 25 liters of water per m³ of concrete per day.

After two weeks, during which the mix was left constantly in the concrete mixer, the concrete was put in a sealed, impermeable sack to prevent the water evaporating. After another week, the mix was again mixed and 15 Kg/m³ of water was added, which allowed to again achieve a consistency class S5 (slump equal to 22 cm).

**Table 8: Slump measurements and water additions**

| Date | Time | Quantity (1/m³) | Initial slump (cm) | Final slump (cm) |
|---|---|---|---|---|
| 1st day | 12.00 | 0 | 23 | 23 |
| 1st day | 18.00 | 0 | 21 | 21 |
| 2nd day | 10.00 | 10 | 18 | 21 |
| 2nd day | 15.00 | 24 | 13 | 21 |
| 3rd day | 9.00 | 50 | - | 23 |
| 4th day | 10.00 | 25 | - | 22 |
| 4th day | 19.15 | 6 | 21 | 22 |
| 5th day | 10.00 | 19 | - | 22 |
| 5th day | 19.00 | 0 | 21 | 21 |
| 8th day | 10.00 | 50 | - | 22 |
| 8th day | 18.30 | 6 | 21 | 23 |
| 9th day | 9.30 | 5 | 20 | 21 |
| 9th day | 18.00 | 25 | 20 | 23 |
| 10th day | 9.00 | 0 | 21 | 21 |
| 10th day | 15.00 | 25 | 20 | 23 |
| 11th day | 9.30 | 12 | 21 | 23 |
| 11th day | 19.00 | 12 | 20 | 22 |
| 12th day | 9.30 | 12 | 21 | 23 |
| 12th day | 17.00 | 15 | 22 | 23 |
| 15th day | 10.00 | 25 | 17 | 22 |
| 16th day | 14.00 | 12 | 20 | 23 |
| 17th day | 11.00 | 6 | 20 | 22 |
| 18th day | 11.00 | 12 | 20 | 23 |
| 19th day | 11.00 | 12 | 21 | 23 |
| Average water added | | 24.5 l/m³ per day | | |

From the experimental data it emerged that it is possible to make a fluid mix that remains fluid for at least 30 days, by adding water to the concrete mixer.

The composition of the fluid mix can therefore be advantageously used for wear tests on pumping units also for extended periods of time. It was possible to make a mix with prolonged workability by using materials with pozzolanic activity such as silica fume and fly ash in the absence of cement. For a further guarantee against residual cement that might be present in the concrete mixer used for mixing and transporting the concrete from the cement plant to the site, in making the mix a high-efficiency retardant additive based on sulphonates was also advantageously used.

## Claims

1. Composition of a fluid mix which does not contain substantially binding materials or substances which produce calcium hydroxide, in particular in the absence of cement or lime, both in the form of oxide and in the form of air-hardening lime and hydrated lime, comprising, with respect to the total weight of said composition:
- water between 7% and 8%, preferably between 7.4% and 7.6% in weight (Kg/m³),
- stone aggregates between 75% and 83%, preferably between 77% and 80% in weight (Kg/m³), including: sand with sizes comprised between 0.063 mm and 4 mm, fine gravel with sizes comprised between 4 mm and 15 mm, gravel with sizes comprised between 15 mm and 40 mm,
- one or more components in the form of pozzolanic additives comprising silicic fly ash between 8% and 16% in weight (Kg/m³)said silicic fly ash having a minimum content of SiO₂ from 40% to 50% in weight and a maximum content of CaO from 2% to 10% in weight and silica fume between 0.9% and 1.7% in weight (Kg/m³),
- one or more high-efficiency retardant additives to delay the setting reaction, between 0.02% and 0.03% in weight (Kg/m³), preferably between 0.023% and 0.027% in weight (Kg/m³),
- one or more high-efficiency water reducing additives between 0.05% and 0.06% in weight (Kg/m³), preferably between 0.052% and 0.055% in weight (Kg/m³).

2. Composition as in claim 1, in which the ratio between water and the sum of fly ash and silica fume is comprised between 0.4 and 0.6.

3. Composition as in claim 1 or 2, in which the silicic fly ash is between 10% and 14% in weight (Kg/m³).

4. Composition as in claim 1, 2 or 3, in which the silica fume is comprised between 1.1 % and 1.5% in weight (Kg/m³).

5. Use of a composition as in any claim from 1 to 4, to carry out wear tests on pumping units.

6. Intermediate preparation composition to achieve a fluid mix comprising water between 7% and 8%, preferably between 7.4% and 7.6% in weight (Kg/m³) with respect to the total weight of said fluid mix and which does not contain substantially any binding materials or substances which produce calcium hydroxide, in particular in the absence of cement or lime, both in the form of oxide and in the form of air-hardening lime or hydrated lime, comprising, with respect to the total weight of said fluid mix: stone aggregates between 75% and 83%, preferably between 77% and 80% in weight (Kg/m³) including: sand with sizes comprised between 0.063 mm and 4 mm, fine gravel with sizes comprised between 4 mm and 15 mm, gravel with sizes comprised between 15 mm and 40 mm, and one or more components in the form of pozzolanic additions comprising silicic fly ash between 8% and 16% in weight (Kg/m³)said silicic fly ash having a minimum content of SiO₂ from 40% to 50% in weight and a maximum content of CaO from 2% to 10% in weight and silica fume between 0.9% and 1.7% in weight (Kg/m³)_{.}

7. Composition as in claim 6, in which the silicic fly ash is between 10% and 14% in weight (Kg/m³).

8. Composition as in claim 7 or 8, in which the silica fume is between 1.1% and 1.5% in weight (Kg/m³).

9. Method to prepare a composition of a fluid mix which does not contain substantially binding materials or substances which produce calcium hydroxide, in particular in the absence of cement or lime, both in the form of oxide and in the form of air-hardening lime or hydrated lime, said method providing to mix with respect to the total weight of said composition, water between 7% and 8%, preferably between 7.4% and 7.6% in weight (Kg/m³), stone aggregates between 75% and 83%, preferably between 77% and 80% in weight (Kg/m³)including: sand with sizes comprised between 0.063 mm and 4 mm, fine gravel with sizes comprised between 4 mm and 15 mm, gravel with sizes comprised between 15 mm and 40 mm, one or more components in the form of pozzolanic additives comprising silicic fly ash between 8% and 16% in weight (Kg/m³), said silicic fly ash having a minimum content of SiO₂ from 40% to 50% in weight and a maximum content of CaO from 2% to 10% in weight and silica fume between 0.9% and 1.7% in weight (Kg/m³), one or more high-efficiency retardant additives to delay the setting reaction, between 0.02% and 0.03% in weight (Kg/m³), preferably between 0.023% and 0.027% in weight (Kg/m³), and one or more high-efficiency water reducing additives between 0.05% and 0.06% in weight (Kg/m³), preferably between 0.052% and 0.055% in weight (Kg/m³).

10. Method as in claim 9, in which the silicic fly ash is between 10% and 14% in weight (Kg/m³).

11. Method as in claim 9 or 10, in which the silica fume is comprised between 1.1% and 1.5% in weight (Kg/m³).

## Patentansprüche

1. Zusammensetzung einer Fluidmischung, welche im Wesentlichen keine Bindemittel oder Substanzen, die Calciumhydroxid bilden, beinhaltet, insbesondere ohne Zement oder Kalk, sowohl in Oxid-Form als auch in der Form von lufthärtendem Kalk und Kalkhydrat, in Hinblick auf die Gesamtmasse der Zusammensetzung aufweisend:
- Wasser zwischen 7% und 8%, bevorzugt zwischen 7,4% und 7,6% der Masse (kg/m³),
- Steinmischungen zwischen 75% und 83%, bevorzugt zwischen 77% und 80% der Masse (kg/m³), umfassend: Sand mit Größen zwischen 0,063mm und 4mm, Feinkies mit Größen zwischen 4mm und 15mm, Kies mit Größen zwischen 15mm und 40mm,
- eine oder mehrere Bestandteile in der Form von puzzolanischen Zusätzen, umfassend silikatische Flugasche zwischen 8% und 16% der Masse (kg/m³), wobei die silikatische Flugasche einen Minimalgehalt von SiO₂ von 40% bis 50% der Masse und einen Maximalgehalt von CaO von 2% bis 10% der Masse und Quarzstaub zwischen 0.9% und 1,7% der Masse (kg/m³) hat,
- eine oder mehrere hoch-effiziente Hemmzusätze, um die Härtungsreaktion zu verzögern, zwischen 0,02% und 0,03% der Masse (kg/m³), bevorzugt zwischen 0,023% und 0,027% der Masse (kg/m³),
- eine oder mehrere hoch-effiziente Wasser vermindernde Zusätze zwischen 0,05% und 0,06% der Masse (kg/m³), bevorzugt zwischen 0,052% und 0,055% der Masse (kg/m³).

2. Zusammensetzung nach Anspruch 1, in welcher das Verhältnis zwischen Wasser und der Summe von Flugasche und Quarzstaub zwischen 0,4 und 0,6 liegt.

3. Zusammensetzung nach Anspruch 1 oder 2, in welcher die silikatische Flugasche zwischen 10% und 14% der Masse (kg/m³) ist.

4. Zusammensetzung nach Anspruch 1, 2 oder 3, in welcher der Quarzstaub zwischen 1,1% und 1,5% der Masse (kg/m³) liegt.

5. Verwendung einer Zusammensetzung nach einem der Ansprüche 1 bis 4, um Verschleißprüfungen bei Pumpeinheiten durchzuführen.

6. Zwischenprodukt-Zusammensetzung um eine Fluidmischung zu erreichen, aufweisend Wasser zwischen 7% und 8%, bevorzugt zwischen 7,4% und 7,6% der Masse (kg/m³) in Hinblick auf die Gesamtmasse der Fluidmischung, und welche im Wesentlichen keine Bindemittel oder Substanzen beinhaltet, die Calciumhydroxid bilden, insbesondere ohne Zement oder Kalk, sowohl in Oxid-Form als auch in der Form von lufthärtendem Kalk oder Kalkhydrat, in Hinblick auf die Gesamtmasse der Fluidmischung aufweisend:
Steinmischungen zwischen 75% und 83%, bevorzugt zwischen 77% und 80% der Masse (kg/m³), umfassend: Sand mit Größen zwischen 0,063mm und 4mm, Feinkies mit Größen zwischen 4mm und 15mm, Kies mit Größen zwischen 15mm und 40mm, und eine oder mehrere Bestandteile in der Form von puzzolanischen Zusätzen, umfassend silikatische Flugasche zwischen 8% und 16% der Masse (kg/m³), wobei die silikatische Flugasche einen Minimalgehalt von SiO₂ von 40% bis 50% der Masse und einen Maximalgehalt von CaO von 2% bis 10% der Masse und Quarzstaub zwischen 0,9% und 1,7% der Masse (kg/m³) hat.

7. Zusammensetzung nach Anspruch 6, in welcher die silikatische Flugasche zwischen 10% und 14% der Masse (kg/m³) ist.

8. Zusammensetzung nach Anspruch 7 oder 8, in welcher der Quarzstaub zwischen 1,1 % und 1,5% der Masse (kg/m³) ist.

9. Verfahren zum Herstellen einer Zusammensetzung einer Fluidmischung, welche im Wesentlichen keine Bindemittel oder Substanzen, die Calciumhydroxid bilden, beinhaltet, insbesondere ohne Zement oder Kalk, sowohl in Oxid-Form als auch in der Form von lufthärtendem Kalk oder Kalkhydrat, wobei das Verfahren vorsieht, in Hinblick auf die Gesamtmasse der Zusammensetzung Wasser zwischen 7% und 8%, bevorzugt zwischen 7,4% und 7,6% der Masse (kg/m³), Steinmischungen zwischen 75% und 83%, bevorzugt zwischen 77% und 80% der Masse (kg/m³), umfassend: Sand mit Größen zwischen 0,063mm und 4mm, Feinkies mit Größen zwischen 4mm und 15mm, Kies mit Größen zwischen 15mm und 40mm, eine oder mehrere Bestandteile in der Form von puzzolanischen Zusätzen, umfassend silikatische Flugasche zwischen 8% und 16% der Masse (kg/m³),wobei die silikatische Flugasche einen Minimalgehalt von SiO₂ von 40% bis 50% der Masse und einen Maximalgehalt von CaO von 2% bis 10% der Masse und Quarzstaub zwischen 0,9% und 1,7% der Masse (kg/m³) hat, einen oder mehrere hoch-effiziente Hemmzusätze, um die Härtungsreaktion zu verzögern, zwischen 0,02% und 0,03% der Masse (kg/m³), bevorzugt zwischen 0,023% und 0,027% der Masse (kg/m³), und eine oder mehrere hoch-effiziente Wasser vermindernde Zusätze zwischen 0,05% und 0,06% der Masse (kg/m³), bevorzugt zwischen 0,052% und 0,055% der Masse (kg/m³), zu mischen.

10. Verfahren nach Anspruch 9, in welchem die silikatische Flugasche zwischen 10% und 14% der Masse ist (kg/m³).

11. Verfahren nach Anspruch 9 oder 10, in welchem der Quarzstaub zwischen 1,1 % und 1,5% der Masse (kg/m³) liegt.

## Revendications

1. Composition d'un mélange de fluides qui ne contient substantiellement pas de matières liantes ou de substances qui produisent de l'hydroxyde de calcium, en particulier en l'absence de ciment ou de chaux, tant sous forme d'oxyde que sous forme de chaux durcissant à l'air et de chaux hydratée, comprenant, par rapport au poids total de ladite composition:
- de l'eau entre 7% et 8%, de préférence entre 7,4% et 7,6% en poids (kg/m³),
- des agrégats de pierres entre 75% et 83%, de préférence entre 77% et 80% en poids (kg/m³), comprenant: du sable avec des grosseurs comprises entre 0,063 mm et 4 mm, des gravillons avec des grosseurs comprises entre 4 mm et 15 mm, du gravier avec des grosseurs comprises entre 15 mm et 40 mm,
- un ou plusieurs composants sous forme d'additifs pouzzolaniques comprenant des cendres volantes de silice entre 8% et 16% en poids (kg/m³), lesdites cendres volantes de silice présentant une teneur minimale en SiO₂ de 40% à 50% en poids et une teneur maximale en CaO de 2% à 10% en poids et de la fumée de silice entre 0,9% et 1,7% en poids (kg/m³),
- un ou plusieurs additifs retardateurs à haute efficacité pour retarder la réaction de prise, entre 0,02% et 0,03% en poids (kg/m³), de préférence entre 0,023% et 0,027% en poids (kg/m³),
- un ou plusieurs additifs réducteurs d'eau à haute efficacité entre 0,05% et 0,06% en poids (kg/m³), de préférence entre 0,052% et 0,055% en poids (kg/m³).

2. Composition selon la revendication 1, dans laquelle le rapport entre l'eau et la somme de cendres volantes et de fumée de silice est compris entre 0,4 et 0,6.

3. Composition selon la revendication 1 ou 2, dans laquelle les cendres volantes de silice sont comprises entre 10% et 14% en poids (kg/m3).

4. Composition selon la revendication 1, 2 ou 3, dans laquelle la fumée de silice est comprise entre 1,1% et 1,5% en poids (kg/m³).

5. Utilisation d'une composition selon l'une quelconque des revendications 1 à 4, pour réaliser des essais d'usure sur des unités de pompage.

6. Composition de préparation intermédiaire pour obtenir un mélange de fluides comprenant de l'eau entre 7% et 8%, de préférence entre 7,4% et 7,6% en poids (kg/m³) par rapport au poids total de ladite composition de fluides et qui ne contient sensiblement pas de matières liantes ou de substances qui produisent de l'hydroxyde de calcium, en particulier en l'absence de ciment ou de la chaux, tant sous forme d'oxyde que sous forme de chaux durcissant à l'air ou de chaux hydratée, comprenant, par rapport au poids total dudit mélange de fluides : des agrégats de pierres entre 75% et 83%, de préférence entre 77% et 80% en poids (kg/m³), comprenant: du sable avec des grosseurs comprises entre 0,063 mm et 4 mm, des gravillons avec des grosseurs comprises entre 4 mm et 15 mm, du gravier avec des grosseurs comprises entre 15 mm et 40 mm, et un ou plusieurs composants sous forme d'additifs pouzzolaniques comprenant des cendres volantes de silice entre 8% et 16% en poids (kg/m³), lesdites cendres volantes de silice présentant une teneur minimale en SiO₂ de 40% à 50% en poids et une teneur maximale en CaO de 2% à 10% en poids et de la fumée de silice entre 0,9% et 1,7% en poids (kg/m³).

7. Composition selon la revendication 6, dans laquelle les cendres volantes de silice sont comprises entre 10% et 14% en poids (kg/m³).

8. Composition selon la revendication 7 ou 8, dans laquelle la fumée de silice est comprise entre 1,1% et 1,5% en poids (kg/m³).

9. Procédé pour préparer une composition d'un mélange de fluides qui ne contient substantiellement pas de matières liantes ou de substances qui produisent de l'hydroxyde de calcium, en particulier en l'absence de ciment ou de chaux, tant sous forme d'oxyde et sous forme de chaux durcissant à l'air ou de chaux hydratée, ledit procédé prévoyant de mélanger, par rapport au poids total de ladite composition, de l'eau entre 7% et 8%, de préférence entre 7,4% et 7,6% en poids (kg/m³), des agrégats de pierres entre 75% et 83 %, de préférence entre 77% et 80% en poids (kg/m³), comprenant: du sable avec des grosseurs comprises entre 0,063 mm et 4 mm, des gravillons avec des grosseurs comprises entre 4 mm et 15 mm, du gravier avec des grosseurs comprises entre 15 mm et 40 mm, un ou plusieurs composants sous forme d'additifs pouzzolaniques comprenant des cendres volantes de silice entre 8% et 16% en poids (kg/m³), lesdites cendres volantes de silice présentant une teneur minimale en SiO₂ de 40% à 50% en poids et une teneur maximale en CaO de 2% à 10% en poids et de la fumée de silice entre 0,9% et 1,7% en poids (kg/m³), un ou plusieurs additifs retardateurs à haute efficacité pour retarder la réaction de prise, entre 0,02% et 0,03% en poids (kg/m³), de préférence entre 0,023% et 0,027% en poids (kg/m³), et un ou plusieurs additifs réducteurs d'eau à haute efficacité entre 0,05% et 0,06% en poids (kg/m³), de préférence entre 0,052% et 0,055% en poids (kg/m³).

10. Procédé selon la revendication 9, dans lequel les cendres volantes de silice sont comprises entre 10% et 14% en poids (kg/m³).

11. Procédé selon la revendication 9 ou 10, dans lequel la fumée de silice est comprise entre 1,1% et 1,5% en poids (kg/m³).
